# EUROPÄISCHE PATENTSCHRIFT

(11) **EP 3 229 524 B1**
(45) Veröffentlichungstag und Bekanntmachung des Hinweises auf die Patenterteilung: **24.07.2019**
(21) Anmeldenummer: 16164063.6
(22) Anmeldetag: 06.04.2016
(51) Int. Cl.: H04W 28/16, G06F 9/50, H04W 72/08, H04W 72/04

(54) **VERFAHREN ZUR STEUERUNG VON FUNKZUGANGSRESSOURCEN IN EINEM KOMMUNIKATIONSNETZWERK**
METHOD FOR CONTROLLING RADIO ACCESS RESOURCES IN A COMMUNICATION NETWORK
PROCÉDÉ DE COMMANDE DE RESSOURCES D'ACCÈS RADIO DANS UN RÉSEAU DE COMMUNICATION

(43) Veröffentlichungstag der Anmeldung: 11.10.2017
(73) Patentinhaber: Deutsche Telekom AG, 53113 Bonn (DE)
(72) Erfinder: ARNOLD, Paul, 60389 Frankfurt am Main (DE); BELSCHNER, Jakob, 60322 Frankfurt (DE); KADEL, Gerhard, 64293 Darmstadt (DE)
(74) Vertreter: Patentship Patentanwaltsgesellschaft mbH

(56) Entgegenhaltungen:
- EP-A1- 2 320 608
- US-A1- 2007 156 804
- US-A1- 2011 125 905
- US-A1- 2013 215 758

## Beschreibung

Die vorliegende Erfindung betrifft die Steuerung von Funkzugangsressourcen in einem Kommunikationsnetzwerk mit voneinander getrennten Subnetzwerken, beispielsweise Slices eines 5G-Kommunikationsneetzwerks.

In modernen Kommunikationsnetzwerken ist die Dienstgüte (Quality of Service) ein wichtiger Faktor zur Beurteilung der Leistungsfähigkeit einer Kommunikationstechnologie. In LTE-Kommunikationssystemen ist die Dienstgüte im Rahmen des 3GPP-Standards beschrieben. Gemäß 3GPP14-23203 ist die Dienstgüte benutzerspezifisch in Abhängigkeit von Dienstgüteparametern wie Durchsatz, Latenz, Bitfehlerrate definiert. Diese Dienstgüteparameter werden beispielswiese in einer Basisstation wie eNodeB in einem LTE-Netzwerk benutzt, um beispielsweise das Scheduling der Daten eines Benutzers zu bestimmen, bei dem die geforderte Dienstgüte sichergestellt wird.

Die nachfolgenden Generationen der mobilen Technologien, beispielsweise die fünfte Generation der mobilen Technologie (5G), verändern jedoch die klassische Netzwerkarchitektur zugunsten von heterogenen Subnetzwerken, sog. Slices, welche logisch voneinander separiert sind. In 5G können insbesondere unterschiedliche Funkzugangstechnologien für die Kommunikation über die Slices verwendet werden.

In US 2011/0125905 A1 ist ein Ansatz zum Allokieren von Ressourcen beschrieben, wobei ein Systemoperator mit einer Infrastrukturressource verbunden werden kann und ein Slice mit gewünschten Eigenschaften und einer gewünschten Kapazität anfragen kann. Ein Slice-Manager kann prüfen, ob die Anfrage erfüllt werden kann und kann dabei zusätzliche Richtlinien berücksichtigen.

In US 2007/0156804 A1 ist ein Ansatz zum Erzeugen eines dynamischen persönlichen virtuellen mobilen Netzwerks beschrieben, wobei Mobilitätsorchestrierungsserver verwendet werden können.

Es ist eine Aufgabe der vorliegenden Erfindung, ein effizientes Dienstgüte-Konzept in einem Kommunikationsnetzwerk mit heterogenen Subnetzwerken, welche über Funkzugangstechnologien erreichbar sind, zu schaffen.

Diese Aufgabe wird durch die Merkmale der unabhängigen Ansprüche gelöst. Vorteilhafte Weiterbildungsformen der Erfindung sind Gegenstand der Beschreibung, der abhängigen Ansprüche, sowie der Figuren.

Die vorliegende Erfindung basiert auf der Erkenntnis, dass heterogene Subnetzwerke eines Kommunikationsnetzwerks, beispielsweise Slices eines 5G-Kommunikationsnetzwerks, Dienstgüteklassen zugeordnet werden können, welche für das jeweilige Subnetzwerk an sich gelten. Diese Dienstgüteklassen sind Subnetzwerken des Kommunikationsnetzwerks zugeordnet. Die Subnetzwerke sind beispielsweise für unterschiedliche Dienste vorgesehen und führen daher dienstspezifische Datenströme mit Dienstgüteklassen, welche gemäß Dienstgütevereinbarungen vorgesehen sind. Daher können unterschiedlichen Subnetzwerken desselben Kommunikationsnetzwerks unterschiedliche Dienstgüteklassen zugeordnet werden. Darüber hinaus können innerhalb eines Subnetzwerks unterschiedliche Dienstgüteklassen für unterschiedliche Datenströme vorgesehen oder vereinbart werden. Die Dienstgüteklassen können beispielsweise die Mindestanforderungen an Dienstgüte definieren, welche einzuhalten sind, beispielsweise zu 95% der Übertragungszeit. Daher können über die Subnetzwerke auch Datenströme mit höheren Dienstgüteklassen als die zumindest vereinbarte Dienstgüteklasse für das jeweilige Subnetzwerk geführt werden. Im Allgemeinen kann das jeweilige Subnetzwerk mehrere Datenströme mit einer oder unterschiedlichen Dienstklassen führen, wobei die für das jeweilige Subnetzwerk vereinbarte Dienstgüteklasse die niedrigste Dienstgüteklasse ist. Mit zunehmender Dienstgüteklasse nimmt auch die Dienstgüte zu. Die Dienstgüteklassen können sich beispielsweise in Datenrate, Bandbreite, Latenzzeit oder Bit- bzw. Blockfehlerrate unterscheiden.

Zur Einhaltung der Dienstgüteklassen in den Subnetzwerken wird beispielsweise die Vergabe der Funkzugangsressourcen, wie beispielsweise Zeit und/oder Frequenzressourcen in beispielsweise einem OFMDA-System, der Funkzugangstechnologien, sog. RAT (Radio Access Technology), gesteuert. Hierbei können einem Subnetzwerk, beispielsweise Slice, durch eine Funkzugangsentität wie Basisstation zusätzliche Funkzugangsressourcen bereitgestellt werden, um die dem Subnetzwerk zugewiesene Dienstgüteklasse zu gewährleisten.

Unterscheiden sich die Funkzugangstechnologien voneinander, so kann für den jeweiligen Datenverkehr ferner die jeweils passende Funkzugangstechnologie eingesetzt bzw. ausgewählt werden. Darüber hinaus kann eine Übergabe einer Kommunikationsverbindung von einer Funkzugangsentität zu einer weiteren Funkzugangsentität erfolgen, um die verfügbaren Kommunikationsressourcen effizienter auszunutzen.

Die Funkzugangsentitäten können daher im Allgemeinen unterschiedliche Funkzugangstechnologien implementieren. Ferner kann eine Funkzugangsentität für den Funkzugang zu genau einem Subnetzwerk oder zu einer Mehrzahl von Subnetzwerken vorgesehen sein.

Gemäß einem ersten Aspekt betrifft die Erfindung ein Verfahren zur Steuerung von Funkzugangsressourcen in einem Kommunikationsnetzwerk, wobei das Kommunikationsnetzwerk eine Mehrzahl von Subnetzwerken mit einem ersten Subnetzwerk und mit einem Subnetzwerk aufweist, wobei jedem Subnetzwerk zumindest eine vorgegebene Dienstgüteklasse gemäß zumindest einer Dienstgütevereinbarung zugeordnet ist, wobei die Dienstgüteklassen der Subnetzwerke durch einen zentralen Dienstgütemanager verwaltet werden, wobei das Kommunikationsnetzwerk ferner ein Funkzugangsnetzwerk mit einer Mehrzahl von Funkzugangsentitäten für einen Funkzugang zu zumindest einem Subnetzwerk der Mehrzahl der Subnetzwerke aufweist, mit: Übermitteln einer Angabe über eine erste Dienstgüteklasse des ersten Subnetzwerks oder des zweiten Subnetzwerks durch den zentralen Dienstgütemanager an eine erste Funkzugangsentität für einen Funkzugang zu dem ersten Subnetzwerk oder dem zweiten Subnetzwerk. Die erste Funkzugangsentität kann ansprechend auf den Empfang der Angabe die Funkzugangsressourcen für die Kommunikationsverbindung mit dem ersten Subnetzwerk oder dem zweiten Subnetzwerk eigenständig zuteilen.

Die für ein Subnetzwerk vereinbarte Dienstgüteklasse kann gemäß einer Ausführungsform als die Mindest-Dienstgüteklasse verstanden werden, mit welcher ein oder mehrere Datenverkehre geführt werden.

Ein Subnetzwerk kann auch weitere Dienstgüteklassen unterstützen, welche höhere Dienstgüten als die Dienstgüte der jeweils vereinbarten Dienstgüteklasse aufweisen. Der zentrale Dienstgütemanager kann daher auch Angaben über höhere Dienstgüteklassen an die Funkzugangsentitäten aussenden, sollte ein Datenverkehr eine höhere als die vereinbarte Dienstgüteklasse benötigen.

Gemäß einer Ausführungsform umfasst das Verfahren das Übermitteln einer Ressourcennachricht durch die erste Funkzugangsentität an den zentralen Dienstgütemanager, wobei die Ressourcennachricht die Verfügbarkeit von Funkzugangsressourcen der ersten Funkzugangsentität für eine Kommunikationsverbindung des ersten Subnetzwerks mit der vereinbarten Dienstgüteklasse anzeigt. Dadurch kann der Dienstgütemanager über die Funkzugangsressourcen der verteilten Funkzugangsentitäten informiert werden.

Gemäß einer Ausführungsform können die Subnetzwerke jeweils auch unterschiedliche Dienstgüten unterstützen, welche Datenströmen oder Benutzern zugeordnet sind. Der zentrale Dienstgütemanager kann daher Angaben über diese Dienstgüten an eine oder mehrere Funkzugangsentitäten übermitteln.

Die Funkzugangsentitäten weisen gemäß einer Ausführungsform den Datenströmen und/oder Subnetzwerken diejenigen Kommunikationsressourcen zu, welche für die Einhaltung der jeweiligen Dienstgütekasse benötigt werden. Hierzu können die Funkzugangsentitäten jeweils eine Datenbank oder eine Look-up-Tabelle aufweisen, in welcher die Funkzugangsressourcen und/oder die Verarbeitungsressourcen den Dienstgüteklassen zugeordnet sind. Die Funkzugangsentitäten können die Funkzugangsressourcen jedoch anhand der Angaben über die Dienstgüteklassen ermitteln. Hierzu können beispielsweise Optimierungsprogramme ausgeführt werden, welche die Funkzugangsressourcen für die jeweiligen Dienstgüteklassen ermitteln.

Für ein Subnetzwerk können gemäß einer Ausführungsform eine oder mehrere Dienstgüteklassen vereinbart sein und dem jeweiligen Subnetzwerk zugeordnet sein. Die Dienstgüteklassen können beispielsweise unterschiedliche Dienstgütequalitäten für unterschiedliche Datenströme oder Services angeben, wie beispielsweise Best-Effort-Service mit einer geringeren Dienstgüte oder eine Ultra-Reliable-Communication mit einer höheren Dienstgüte.

Die Angabe über die Dienstgüteklasse kann die jeweilige Dienstgüteklasse spezifizieren. Die Angabe kann beispielsweise eine QoS-Identifier aufweisen, welcher auf eine Dienstgüte (QoS, Quality of Service) hinweist.

Die Subnetzwerke können unterschiedliche Services bereitstellen. So kann ein erstes Subnetzwerl ein LTE-Subnetzwerk mit einer Dienstgüteklasse, ein weiteres Subnetzwerk kann ein mMTC-Subnetzwerk mit einer oder mehreren Dienstgüteklassen, und ein weiteres Subnetzwerk kann ein Car-to-X-Subnetzwerk sein, welches zwei Dienstgüteklassen unterstützt, wie beispielsweise Best Effort oder Ultra-Reliable-Communication.

Gemäß einer Ausführungsform teilt die erste Funkzugangsentität die Funkzugangsressourcen der ersten Funkzugangsentität für die Kommunikationsverbindung in Abhängigkeit von der übermittelten Angabe über die Dienstgüteklasse des ersten Subnetzwerks zu. Dies kann beispielsweise dann geschehen, falls die Ressourcennachricht die Verfügbarkeit der Funkzugangsressourcen der ersten Funkzugangsentität anzeigt.

Die Funkzugangsentitäten entscheiden gemäß einer Ausführungsform eigenständig über die zu verteilenden Funkzugangsressourcen. Hierzu können die Funkzugangsentitäten Ressourcen-Manager aufweisen, welche die Funkzugangsressourcen der jeweiligen Funkzugangsentität steuern bzw. zuweisen. Dies kann beispielsweise auf der Basis einer Look-up-Tabelle erfolgen, in welcher unterschiedlichen Dienstgüteklassen unterschiedliche Funkzugangsressourcen zugeordnet sind.

Gemäß einer Ausführungsform initiiert der zentrale Dienstgütemanager eine Übergabe der Kommunikationsverbindung des ersten Subnetzwerks von der ersten Funkzugangsentität zu einer zweiten Funkzugangsentität der Mehrzahl der Funkzugangsentitäten. Die Initiierung kann gemäß einem Optimierungsparameter erfolgen.

Der Optimierungsparameter kann beispielsweise diejenige Funkzugangstechnologie anzeigen, welche für einen bestimmten Service oder Datenstrom geeigneter als eine andere Technologie ist.

Der Optimierungsparameter kann ferner zumindest einer der folgenden Optimierungsparameter sein: Verfügbarkeit von Funkzugangsressourcen der Funkzugangsentitäten für die jeweilige Kommunikationsverbindung mit der jeweiligen Dienstgüteklasse, Lastausgleich, insbesondere Load Balancing, unter den Funkzugangsentitäten, Auswahl einer Funkzugangsentität mit den geringsten Funkzugangsressourcen, welche die jeweilige Dienstgüteklasse erfüllen, Auswahl einer Funkzugangseinheit zur zusätzlichen Erfüllung von Dienstgüteanforderungen an einen Datenstrom, Service und/oder Benutzer.

Gemäß einer Ausführungsform wählt der zentrale Dienstgütemanager eine Funkzugangsentität für eine Kommunikationsverbindung gemäß einem Optimierungsparameter aus. Der Optimierungsparameter kann der vorgenannte Optimierungsparameter sein.

Gemäß einer Ausführungsform ist pro Dienstgüteklasse eine Dienstgütevereinbarung geschlossen.

Gemäß einer Ausführungsform entsprechen die Dienstgüteklassen den QCI-Klassen (QCI: QoS Class Identifier), beispielsweise eines LTE-Kommunikationssystems.

Gemäß einer Ausführungsform initiiert der zentrale Dienstgütemanager die Übergabe der Kommunikationsverbindung, falls die Ressourcennachricht anzeigt, dass die Funkzugangsressourcen der ersten Funkzugangsentität für die Kommunikationsverbindung mit der ersten Dienstgüteklasse nicht verfügbar sind, wobei die erste Funkzugangsentität die Übergabe der Kommunikationsverbindung des ersten Subnetzwerkes zu der zweiten Funkzugangsentität einleitet, oder wobei die Kommunikationsverbindung des ersten Subnetzwerks mittels der ersten Funkzugangsentität erfolgt, falls die Funkzugangsressourcen der ersten Funkzugangsentität für die erste Dienstgüteklasse ausreichend sind.

Gemäß einer Ausführungsform umfasst das Verfahren die folgenden Schritte, falls die Ressourcennachricht anzeigt, dass die Funkzugangsressourcen der ersten Funkzugangsentität für die Kommunikationsverbindung mit der ersten Dienstgüteklasse nicht ausreichend sind: Übermitteln der Angabe über die erste Dienstgüteklasse des ersten Subnetzwerks durch den zentralen Dienstgütemanager an die zweite Funkzugangsentität für einen Funkzugang zu dem ersten Subnetzwerk; Empfangen einer Ressourcennachricht von der zweiten Funkzugangsentität, insbesondere von einem Ressourcenmanager der zweiten Funkzugangsentität; und Einleiten der Übergabe der Kommunikationsverbindung des ersten Subnetzwerks von der ersten Funkzugangsentität zu der zweiten Funkzugangsentität, falls die Ressourcennachricht von der zweiten Funkzugangsentität die Verfügbarkeit von Funkzugangsressourcen für die Einhaltung der ersten Dienstgüteklasse für die Kommunikationsverbindung des ersten Subnetzwerks anzeigt.

Gemäß einer Ausführungsform sind die Funktionen der Subnetzwerke durch einen Netzwerk-Orchestrierer vorgegeben, wobei der zentrale Dienstgütemanager eine Nachricht an den Netzwerk-Orchestrierer aussendet, falls eine Dienstgütevereinbarung nicht eingehalten werden kann. Der Netzwerk-Orchestrierer kann ansprechend hierauf eine alternative Route für eine Kommunikationsverbindung wählen oder das Kommunikationsnetz rekonfigurieren. Der Netzwerk-Orchestrierer kann ferner einem Subnetzwerk weitere Funktionen zuweisen, um die Dienstgüteklasse gemäß der betroffenen Dienstgütevereinbarung zu erfüllen.

Gemäß einer Ausführungsform wird die Kommunikationsverbindung des ersten Subnetzwerkes über die erste Funkzugangsentität geführt, falls die Funkzugangsressourcen der ersten Funkzugangsentität für die erste Dienstgüteklasse ausreichend sind.

Gemäß einer Ausführungsform umfasst jede Funkzugangsentität eine Ressourcensteuerung zur Steuerung von Funkzugangsressourcen der jeweiligen Funkzugangsentität, und wobei die Ressourcensteuerung der jeweiligen Funkzugangsentität dem jeweiligen Subnetzwerk Funkzugangsressourcen der ersten Funkzugangsentität zuweist, um die jeweilige Dienstgüteklasse zu unterstützen.

Gemäß einer Ausführungsform weisen die Funkzugangsressourcen zumindest eine der folgenden Funkzugangsressourcen auf: Bandbreite, Frequenzspektrum, Zeitressourcen, Anzahl von Übertragungsrahmen, Anzahl von Zeitschlitzen, Sendeleistung, Zeitlage von Zeitschlitzen, Zeitlage von Übertragungsrahmen.

Gemäß einer Ausführungsform weist die jeweilige Dienstgüteklasse zumindest einen der folgenden Parameter auf: Bandbreite, Datenrate, Bitrate, Bitfehlerrate, Blockfehlerrate, Übertragungsverzögerung.

Gemäß einer Ausführungsform sind die Funkzugangseinheiten Basisstationen oder Router, insbesondere drahtlose Router.

Gemäß einer Ausführungsform sind die Funkzugangseinheiten für unterschiedliche Funkzugangstechnologien ausgelegt, insbesondere LTE, WLAN, UMTS, GSM, 5G, und Kommunikationstechnologien für Maschine Type Communication (MTC)..

Gemäß einer Ausführungsform weist der zentrale Dienstgütemanager eine Datenbank mit Dienstgüteklassen für die Subnetzwerke auf.

Gemäß einer Ausführungsform sind das Kommunikationsnetzwerk ein Kommunikationssetzwerk zumindest der fünften (5G) Generation ist, und wobei die Subnetzwerke Netzwerk-Slices.

Gemäß einer Ausführungsform sind die Subnetzwerke kommunikationstechnisch oder datentechnisch voneinander isoliert.

Gemäß einem zweiten Aspekt betrifft die Erfindung einen zentralen Dienstgütemanager zur Steuerung von Funkzugangsressourcen in einem Kommunikationsnetzwerk in Abhängigkeit von Dienstgüteklassen von Subnetzwerken des Kommunikationsnetzwerks, wobei jedem Subnetzwerk eine vorgegebene Dienstgüteklasse gemäß einer Dienstgütevereinbarung zugeordnet ist, wobei das Kommunikationsnetzwerk ferner ein Funkzugangsnetzwerk mit einer Mehrzahl von Funkzugangsentitäten für einen Funkzugang zu der Mehrzahl der Subnetzwerke aufweist, mit: einem Speicher, in welchem Angaben über Dienstgüteklassen der Subnetzwerke gespeichert sind; einem Prozessor, welcher ausgebildet ist, eine Angabe über eine Dienstgüteklasse des ersten Subnetzwerks aus dem Speicher auszulesen; und einer Kommunikationsschnittstelle zum Aussenden einer Angabe über eine erste Dienstgüteklasse eines ersten Subnetzwerks des Kommunikationsnetzwerks an eine erste Funkzugangsentität für einen Funkzugang zu dem ersten Subnetzwerk.

Gemäß einer Ausführungsform ist die Kommunikationsschnittstelle ausgebildet, eine Ressourcennachricht von der ersten Funkzugangsentität zum empfangen, wobei die Ressourcennachricht die Verfügbarkeit von Funkzugangsressourcen der ersten Funkzugangsentität für eine Kommunikationsverbindung des ersten Subnetzwerks mit der vereinbarten Dienstgüteklasse anzeigt; wobei der Prozessor ausgebildet ist, die Kommunikationsverbindung des ersten Subnetzwerks über die erste Funkzugangsentität zu führen, falls die Ressourcennachricht die Verfügbarkeit von Funkzugangsressourcen für die Kommunikation mit der ersten Dienstgüteklasse anzeigt, oder eine Übergabe der Kommunikationsverbindung an eine zweite Funkzugangsentität eines zweiten Subnetzwerks der Mehrzahl von Subnetzwerke einzuleiten, falls die Ressourcennachricht anzeigt, dass die Funkzugangsressourcen der ersten Funkzugangsentität für die Kommunikationsverbindung mit der ersten Dienstgüteklasse nicht ausreichend sind.

Der zentrale Dienstgütemanager kann zur Ausführung des Verfahrens gemäß dem ersten Aspekt vorgesehen sein. Der zentrale Dienstgütemanager kann die Merkmale des im Zusammenhang mit dem ersten Aspekt beschriebenen zentralen Dienstgütemanagers aufweisen.

Weitere Ausführungsbeispiele werden Bezug nehmend auf die beiliegenden Zeichnungen erläutert. Es zeigen:
Fig. 1 eine beispielhafte 5G-Systemarchitektur;
Fig. 2 eine schematische Darstellung eines 5G-Kommunikationsnetzwerks;
Fig. 3 ein Kommunikationsnetzwerk;
Fig. 4 ein Kommunikationsnetzwerk;
Fig. 5 ein Ablaufdiagramm eines Verfahrens zur Steuerung von Funkzugangsressourcen; und
Fig. 6 zeigt ein schematisches Blockdiagramm eines zentralen Dienstgütemanagers.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Funkzugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Funkzugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Funkzugangsnetz beispielsweise einen DSLAM (Digital Subscriber Line Access Multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

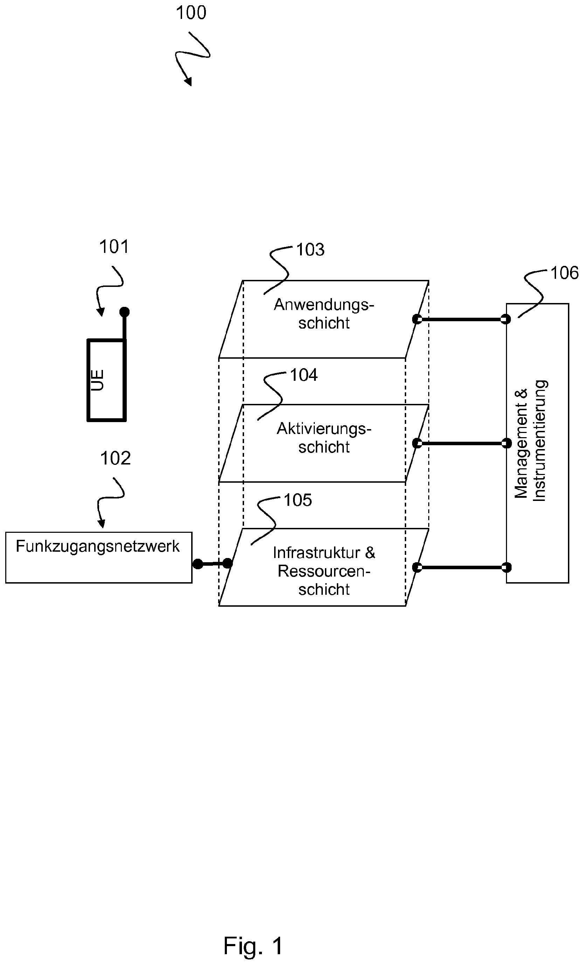

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten (sog. Fixed-Mobile Convergence) mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben bzw. Subnetzwerke) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV (Network Function Virtualization, Netzwerkfunktionsvirtualisierung), SDN (Software-defined Networking, Software-definierte Vernetzung) oder SON (Self-organizing Networks, selbstorganisierende Netzwerke). Die Management- & Instrumentierungsebene 106 nutzt dabei datenunterstützte Intelligenz, um alle Aspekte der Dienstanordnung und -bereitstellung zu optimieren.

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben.

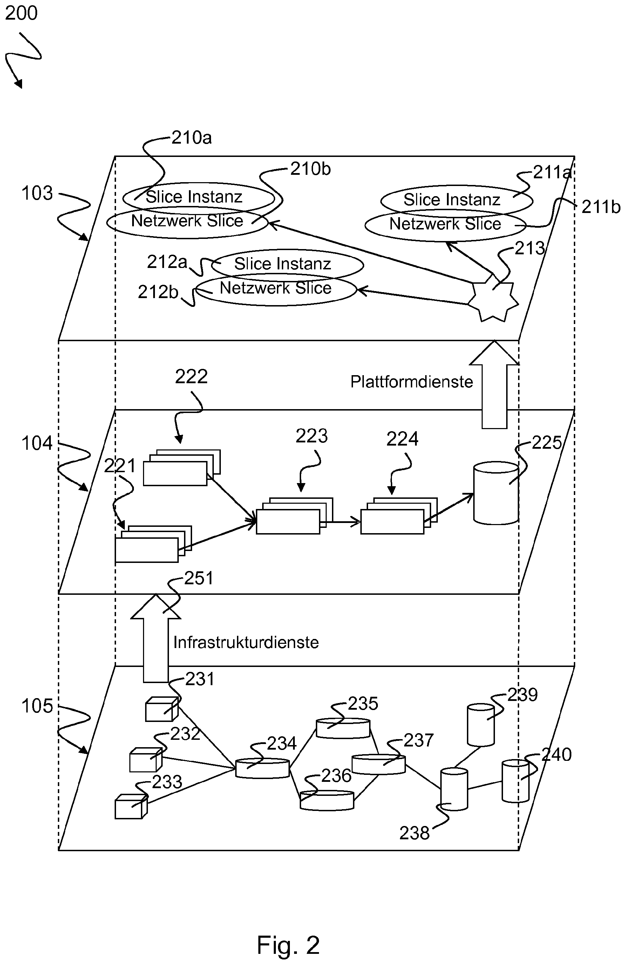

Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte.

Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Die Slices 210b, 211b, 212b formen Ausführungsbeispiele von Subnetzwerken eines Kommunikationsnetzwerks.

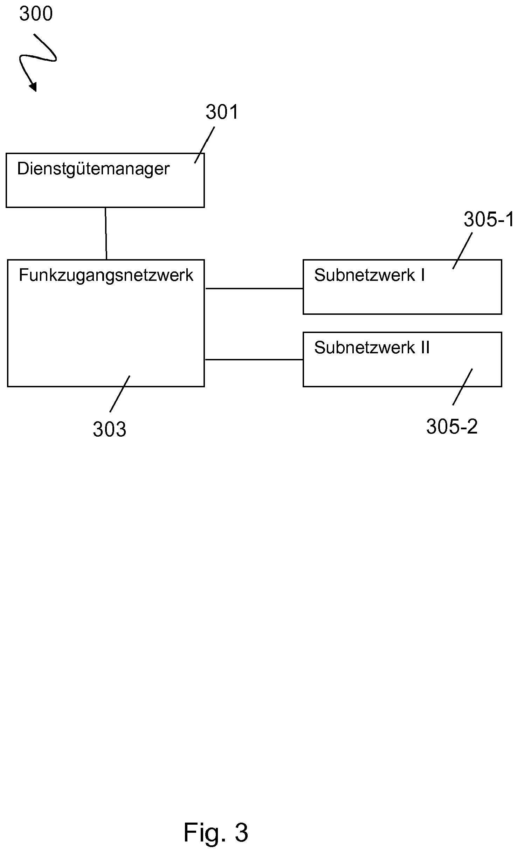

Fig. 3 zeigt ein Kommunikationsnetzwerk 300 mit einer Mehrzahl von Subnetzwerken 305, mit einem ersten Subnetzwerk 305-1 und mit einem Subnetzwerk 305-2, wobei jedem Subnetzwerk 305 eine vorgegebene Dienstgüteklasse gemäß einer Dienstgütevereinbarung zugeordnet ist, wobei die Dienstgüteklassen der Subnetzwerke 305-1, 305-2 durch einen zentralen Dienstgütemanager 301 verwaltet werden, wobei das Kommunikationsnetzwerk ferner ein Funkzugangsnetzwerk 303 mit einer Mehrzahl von in Fig. 3 nicht dargestellten Funkzugangsentitäten, beispielsweise Basisstationen, für einen Funkzugang zu der Mehrzahl der Subnetzwerke 305 aufweist.

Die Dienstgüteklassen geben Dienstgüten (QoS) für die Subnetzwerke 305-1, 305-2 an. Die Dienstgüteklassen können beispielsweise eine Datenrate, eine Latenzzeit, eine Bit- oder Blockfehlerrate, Frequenz- und/oder Ressourcen wie Bandbreite oder Zeitschlitze spezifizieren bzw. angeben. Die Dienstgüteklassen können gemäß einer Dienstgütevereinbarung (SLA: Service Level Agreement) für die Subnetzwerke 305 bzw. für die Datenströme der Subnetzwerke 305 definiert sein.

Die Dienstgüteklassen der Subnetzwerke 305 sind gemäß einer Ausführungsform Benutzer unabhängig. Die Subnetzwerke 305 können darüber hinaus jedoch Benutzer abhängige Dienstklassen berücksichtigen.

Der zentrale Dienstgütemanager 301 ist beispielswiese der Management- & Instrumentierungsebene 106 zugeordnet und verwaltet die Dienstgüteklassen der Subnetzwerke 305.

Das Funkzugangsnetzwerk 303 (RAN, Radio Access Network) ist für den Funkzugang zu den Subnetzwerken 305 vorgesehen. Das Funkzugangsnetzwerk 303 kann beispielswiese Basisstationen, Antennen, Router und weitere RAN-Komponenten aufweisen.

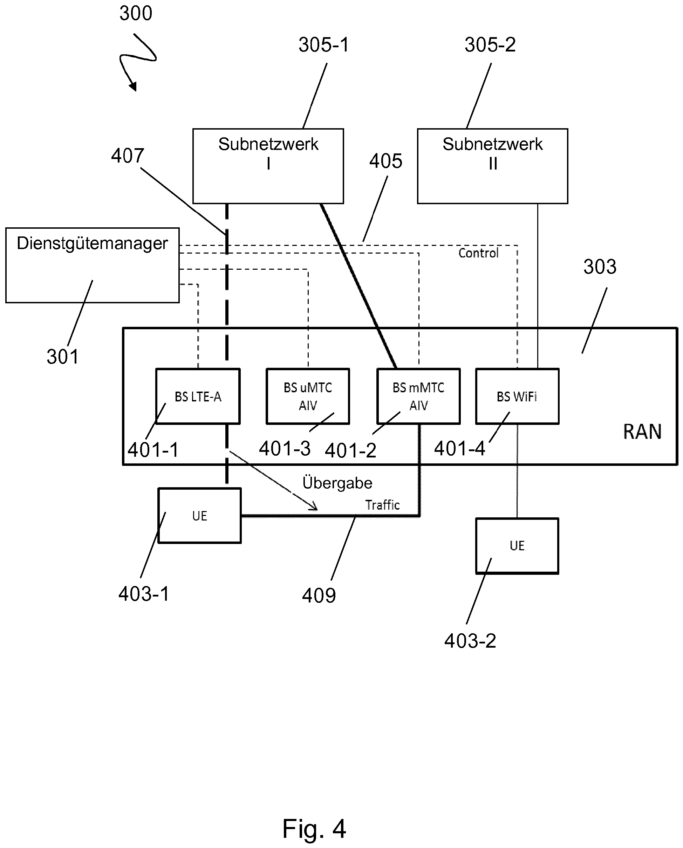

Die Ressourcensteuerung wird anhand des in Fig. 4 dargestellten Kommunikationsnetzwerks 300 gemäß einer Ausführungsform beschrieben.

Das Funkzugangsnetzwerk 303 kann beispielsweise eine Mehrzahl von Basisstationen, beispielsweise die Basisstationen 401-1 bis 401-4 aufweisen, welche unterschiedlichen Funkzugangstechnologien (RAT: Radio Acces Technology), wie beispielsweise LTE, WLAN, WiFi, UMTS, GSM, und Funkzugangstechnologie für Machine Type Communication (MTC) zugeordnet sein können. Auf diese Weise können mobile Endgeräte (UE) 403-1, 403-2 über die Subnetzwerke 305-1, 305-2 kommunizieren. Im Funkzugangsnetzwerk 303 können jedoch mehr oder weniger Basisstationen angeordnet sein. Die Ausführungsbeispiele beziehen sich daher zumindest auf eine Basisstation.

Der Dienstgütemanager 301 hat beispielsweise eine Datenbank mit Dienstgüteklassen für die Subnetzwerke 305-1, 305-3, welche die Dienstgüten (QoS) definieren, welche in Bezug auf die Subnetzwerke 305-1, 305-3 definiert sind. Die Dienstgüten sind im Falle von 5G-Netzwerken der Management- & Instrumentierungsebene 106 oder einem Orchestrierer, welcher als Element des Core-Netzwerks 503 die Subnetzwerke 305-1, 305-3 (Slices) definiert, bekannt. Alternativ oder zusätzlich kann der Dienstgütemanager 301 die Dienstgüteklassen von einer übergeordneten Entität wie dem erwähnten Orchestrierer oder den Subnetzwerken 305-1, 305-3 selbst erhalten.

Zur Anpassung von Funkzugangsressourcen an die Dienstgüten übermittelt der Dienstgütemanager 301 beispielsweise eine Angabe über eine erste Dienstgüteklasse des ersten Subnetzwerks 305-1 an eine erste Funkzugangsentität 401-1 für einen Funkzugang zu dem ersten Subnetzwerk 305-1. Die erste Funkzugangsentität 401-1 kann eine Ressourcennachricht an den zentralen Dienstgütemanager 301 übermitteln, wobei die Ressourcennachricht die Verfügbarkeit von Funkzugangsressourcen der ersten Funkzugangsentität 401-1 für eine Kommunikationsverbindung des ersten Subnetzwerks 305-1 mit der vereinbarten Dienstgüteklasse anzeigt. Die Angabe kann ein QoS-Identifier sein.

Die Ressourcennachricht formt gemäß einer Ausführungsform eine Bestätigung, welche die jeweilige Funkzugangsentität 401 ansprechend auf den Empfang der Angabe über die jeweilige Dienstgüteklasse an den Dienstgütemanager aussendet.

Die Funkzugangsentitäten 401 weisen die eigenen Funkzugangsressourcen gemäß den geforderten Dienstgüteklassen den Kommunikationsverbindungen bzw. den Datenströmen eigenständig zu.

Verfügt die erste Funkzugangsentität 401-1 über ausreichend Ressourcen, beispielsweise Kommunikationsressourcen, so wird die Kommunikationsverbindung 407 aufgebaut oder aufrechterhalten.

Hierzu können die Funkzugangsentitäten 401-1 bis 401-4 Ressourcen-Manager aufweisen, welche die Ressourcen der Funkzugangsentitäten wie Bandbreite, Sendeleistung dem jeweiligen Subnetzwerk 305-1, 305-2 zuordnen (Scheduling).

Zeigt die Ressourcennachricht jedoch an, dass die Funkzugangsentität 401-1 nicht genügend Ressourcen für die Einhaltung der geforderten Dienstgüteklasse für das erste Subnetzwerk 305-1 aufweist, so kann der zentrale Dienstgütemanager 301 eine zweite Funkzugangsentität auswählen und eine Übergabe der Kommunikationsverbindung bzw. eines Datenstroms zu der weiteren Funkzugangsentität 401, beispielsweise der Funkzugangsentität 401-2, initiieren.

Die zweite Funkzugangsentität 401-2 kann vor der Einleitung der Übergabe der Kommunikationsverbindung, beispielsweise Handover, in vorstehend beschriebener Weise ebenfalls ein Ressourcensignal an den zentralen Dienstgütemanager 301 übermitteln. Zeigt das Ressourcensignal an, dass die zweite Funkzugangsentität 401-3 ausreichend Ressourcen für die Einhaltung der Dienstgüteklasse für das erste Subnetzwerk 305-1 aufweist, so wird die Kommunikationsverbindung 409 über die zweite Funkzugangsentität 401-2 geführt. Hierbei können auch unterschiedliche Funkzugangstechnologien zum Einsatz kommen.

Gemäß einer Ausführungsform hat das Ressourcen Management in der Management- & Instrumentierungsebene 106, insbesondere der zentrale Dienstgütemanager 301, Kenntnis von den SLAs für die Subnetzwerke 305-1, 305-2, beispielsweise Netzwerk Slices, in welchen die Dienstgüte-Anforderungen von Datenströmen, welche den Subnetzwerken 305-1, 305-2 zugeordnet sind, sowie ggf. den Funkkanaleigenschaften im Funkzugangsnetz. Basierend auf dieser Information kann der zentrale Dienstgütemanager 301 entscheiden, welcher Datenstrom über welche Basisstation sowie Funkzugangstechnologie übertragen werden soll (Datenstromsteuerung). Falls beispielsweise nicht alle QoS-Anforderungen erfüllt werden können, kann der zentrale Dienstgütemanager 301 entscheiden, den jeweiligen Datenstrom über diejenige Funkzugangstechnologie und/oder Funkzugangsentität zu führen, welche eine nächstniedrigere Dienstgüteklasse garantieren. Auf diese Weise wird einer starken Degradierung der Dienstgüte entgegengewirkt.

Die Dienstgüteklasse kann beispielsweise angeben, dass einem Subnetzwerk 95% der Kommunikationszeit mit 10 Mbps zugesichert werden.

Der Dienstgütemanager 301 informiert gemäß einer Ausführungsform das Funkzugangsnetz 303 (RAN), beispielsweise Basisstationen oder Router, über die SLA bzw. Dienstgütevereinbarungen (QoS-Vereinbarungen) bezüglich der Subnetzwerke 305, beispielsweise Slices.

Im Funkzugangsnetz 303 werden die Ressourcen ansprechend auf diese Information eigenständig, beispielsweise durch die Scheduler der Funkzugangsentitäten 401, gesteuert bzw. verteilt.

Die Ressourcensteuerung kann beispielsweise darin bestehen, dass demjenigen Subnetzwerk mit einer höheren Dienstgüteklasse gemäß einer Dienstgütevereinbarung, beispielsweise mit mehr Bandbreite, mehr Kommunikationsressourcen zugewiesen werden, wie beispielsweise mehr Bandbreite oder mehrere Zeitrahmen.

Die Ressourcensteuerung wird in den Ressourcen-Managern, z.B. Schedulern, der Funkzugangsentitäten, beispielsweise Basisstationen eigenständig durchgeführt.

Die Basisstationen informieren den Dienstgütemanager 301 gemäß einer Ausführungsform über den Datenstrom, beispielswiese über die Fehlerrate, die Datenrate etc. Ferner können die Funkzugangsentitäten den Dienstgütemanager 301 darüber informieren, ob QoS-Kriterien eingehalten oder nicht eingehalten werden können.

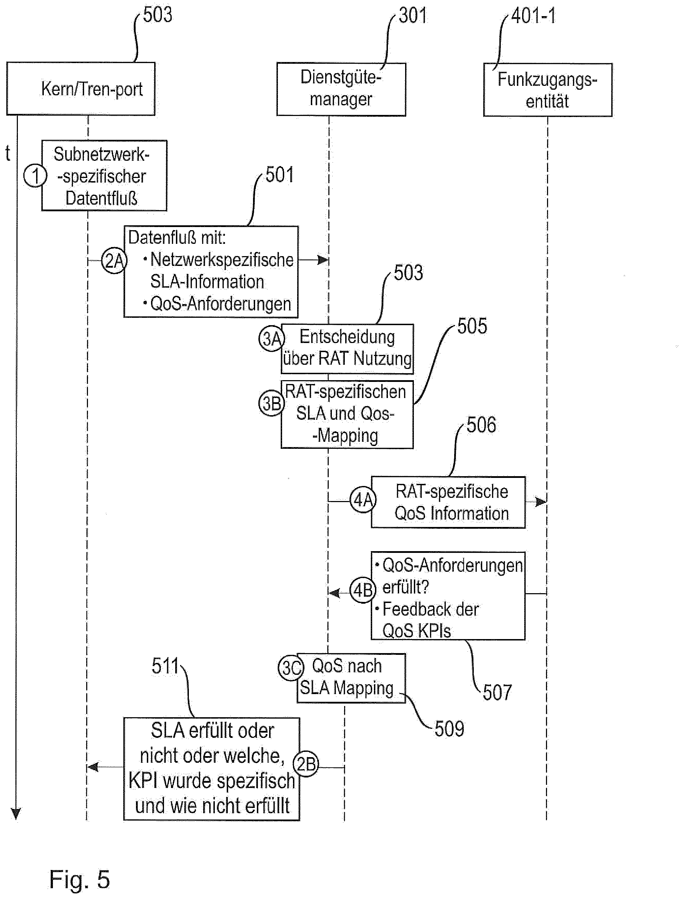

Fig. 5 zeigt ein beispielhaftes Ablaufdiagramm eines Verfahrens zur Steuerung von Funkzugangsressourcen, am Beispiel des ersten Subnetzwerks 305-1 sowie der Funkzugangsentität 401-1 mit einem Subnetzwerk-spezifischen Datenflusses. Das Subnetzwerk 305-1 kann beispielsweise im Core-Netz für Datentransport vorgesehen sein.

Der Orchestrierer, welcher Teil des Core-Netzwerks 503 ist, ist für den Zusammenbau des Kommunikationsnetzes zuständig und informiert im den Dienstgütemanager 301, welche Subnetzwerke 305 es gibt und welche SLAs gelten.

Im Schritt 501 übermittelt eine Netzentität des Core-Netzwerkes 503, beispielsweise der Orchestrierer oder ein Router, den Dienstgütemanager 301 die Dienstgüte-Anforderungen und optional auch eine Angabe des ersten Subnetzwerks 305-1 über SLA eines auftretenden Datenstroms. Diese Angaben können z.B. in der Schicht 2 (Layer 2) oder Schicht 3 (Layer 3) des IP-Protokolls wie IPv4 oder IPv6 im Header als Header-Information übertragen werden.

Im Schritt 502 kann der Dienstgütemanager 301 entscheiden, welche Funkzugangstechnologie, wie LTE oder WLAN, für einen ggf. spezifischen Datenstrom genutzt werden soll. Im Schritt 505 wird durch den Dienstgütemanager 301 ein Mapping von Dienstgüte- bzw. SLA-Anforderungen Funkzugang durchgeführt, um eine Angabe über eine Dienstgüteklasse zu erhalten. Die Angabe über die Dienstgüteklasse kann Funkzugangstechnologie-spezifisch sein und beispielsweise Angaben über Bandbreite, Latenzzeit oder Datenrate aufweisen.

Im Schritt 506 wird die Angabe über die Dienstgüteklasse an eine Funkzugangsentität, beispielsweise an die Funkzugangsentität 401-1 übermittelt.

Die erste Funkzugangsentität 401-1 übermittelt im Schritt 507 eine Ressourcennachricht an den Dienstgütemanager 301, wobei die Ressourcennachricht beispielsweise die Verfügbarkeit von Funkzugangsressourcen der ersten Funkzugangsentität 401-1 für eine Kommunikationsverbindung des ersten Subnetzwerks 305-1 mit der vereinbarten Dienstgüteklasse anzeigt. Darüber hinaus kann ein Feedback bezüglich der KPIs erfolgen, wie beispielswiese Durchsatz, Latenz oder Bit- bzw. Blockfehlerrate. Die Ressourcennachricht kann ferner Information enthalten, ob der Datenstrom erfolgreich mit der geforderten QoS übertragen werden kann oder konnte.

Hierzu kann die erste Funkzugangsentität 401-1 einen Ressourcenmanager, beispielsweise einen Scheduler, aufweisen, welcher die Kommunikationsressourcen wie Frequenz-/Zeitressourcen dem ersten Subnetzwerk 305-1 zuweist, um die geforderte Dienstgüteklasse zu erreichen.

Im Schritt 509 kann der Dienstgütemanager 301 die erreichte Dienstgüteklasse auf die Dienstgütevereinbarung (SLA) abbilden (mappen) und im Schritt 511 eine Nachricht an die Netzwerk-Entität des Core-Netzwerks 503 aussenden mit der Angabe, ob die SLA erfüllt ist oder nicht oder welcher KPI, wie beispielsweise Datenrate, nicht erreicht wird und wie groß die Abweichung von der Anforderung gemäß der geforderten Dienstgüteklassen ist.

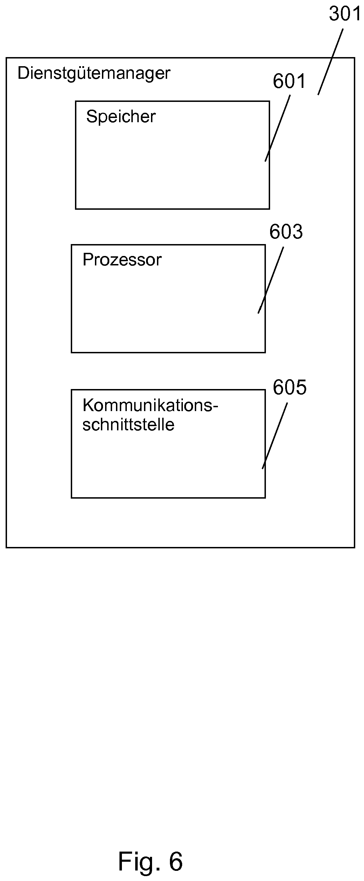

Fig. 6 zeigt ein schematisches Blockdiagramm des zentralen Dienstgütemanagers 301 zur Steuerung von Funkzugangsressourcen in dem Kommunikationsnetzwerk 300 in Abhängigkeit von Dienstgüteklassen von Subnetzwerken 305 des Kommunikationsnetzwerks 300, wobei jedem Subnetzwerk 305 eine vorgegebene Dienstgüteklasse gemäß einer Dienstgütevereinbarung (SLA) zugeordnet ist, wobei das Kommunikationsnetzwerk 300 ferner ein Funkzugangsnetzwerk 303 mit einer Mehrzahl von Funkzugangsentitäten 401 für einen Funkzugang zu der Mehrzahl der Subnetzwerke 305 aufweist. Der zentrale Dienstgütemanager 301 hat einen Speicher 601, in welchem Angaben über Dienstgüteklassen der Subnetzwerke gespeichert sind, eine Kommunikationsschnittstelle 605 zum Aussenden einer Angabe über eine erste Dienstgüteklasse eines ersten Subnetzwerks 305-1 des Kommunikationsnetzwerks 300 an eine erste Funkzugangsentität 401-1 für einen Funkzugang zu dem ersten Subnetzwerk 305-1, wobei die Kommunikationsschnittstelle 605 ausgebildet ist, eine Ressourcennachricht von der ersten Funkzugangsentität 401-1 zu empfangen, wobei die Ressourcennachricht die Verfügbarkeit von Funkzugangsressourcen der ersten Funkzugangsentität 401-1 für eine Kommunikationsverbindung des ersten Subnetzwerks 305-1 mit der vereinbarten Dienstgüteklasse anzeigt. Die Kommunikationsschnittstelle 605 kann eine drahtlose oder eine drahtgebundene Kommunikationsschnittstelle sein.

Der Dienstgütemanager hat ferner einen Prozessor 301, welcher ausgebildet ist, die Kommunikationsverbindung des ersten Subnetzwerks 305-1 über die erste Funkzugangsentität 401-1 zu führen, falls die Ressourcennachricht beispielsweise die Verfügbarkeit von Funkzugangsressourcen für die Kommunikation mit der ersten Dienstgüteklasse anzeigt.

Der Prozessor 301 kann jedoch ausgebildet sein, die Übergabe der Kommunikationsverbindung an eine zweite Funkzugangsentität 401-2 eines zweiten Subnetzwerks 305-2 der Mehrzahl von Subnetzwerke 305 einzuleiten. Diese Übergabe kann beispielsweise anhand des vorgenannten Optimierungsparameters oder, falls die Ressourcennachricht anzeigt, dass die Funkzugangsressourcen der ersten Funkzugangsentität 401-1 für die Kommunikationsverbindung mit der ersten Dienstgüteklasse nicht ausreichend sind.

Die Funkzugangsentitäten 401 können die Funkzugangsressourcen beispielsweise durch Zuweisung von mehr oder weniger Bandbreite oder von mehr oder weniger Zeitschlitzen zu einem Subnetzwerk 305 und/oder zu einem Datenstrom bewirken.

## Patentansprüche

1. Verfahren zur Steuerung von Funkzugangsressourcen in einem Kommunikationsnetzwerk (300),
das eine Mehrzahl von logisch voneinander separierten Subnetzwerken (305, 305-1, 305-2) aufweist, denen jeweils eine vorgegebene Dienstgüteklasse gemäß zumindest einer Dienstgütevereinbarung für Kommunikationsdienste zugeordnet ist,
das einen zentralen Dienstgütemanager (301) aufweist, der die Dienstgüteklassen der Subnetzwerke (305) verwaltet und unter Nutzung der Funkzugangsressourcen die Dienstgüte für Kommunikationsverbindungen von mobilen Endgeräten zu den Subnetzwerken bereitstellt,
das ferner ein Funkzugangsnetzwerk (303) aufweist mit einer Mehrzahl von Funkzugangsentitäten (401) zur Bereitstellung von Funkzugang für mobile Endgeräte (403) zu den Subnetzwerken,
das Verfahren die Schritte umfassend:
Übermitteln einer Anfrage für einen Funkzugang eines mobilen Endgerätes (403-1) über das Funkzugangsnetzwerk (303) zu einem ersten Subnetzwerk (305-1) mit Angabe über die Dienstgüteklasse des ersten Subnetzwerks (305-1) durch den zentralen Dienstgütemanager (301) an eine erste Funkzugangsentität (401-1);
Übermitteln einer Ressourcennachricht durch die erste Funkzugangsentität (401-1) an den zentralen Dienstgütemanager (301), wobei die Ressourcennachricht anzeigt, dass die verfügbaren Funkzugangsressourcen der ersten Funkzugangsentität (401-1) für eine Kommunikationsverbindung zwischen dem mobilen Endgerät (403-1) und dem ersten Subnetzwerk (305-1) mit der Dienstgüteklasse nicht ausreichend sind;
Übermitteln der Anfrage für einen Funkzugang eines mobilen Endgerätes (403-1) über das Funkzugangsnetzwerk (303) zu dem ersten Subnetzwerk (305-1) mit Angabe über die Dienstgüteklasse des ersten Subnetzwerks (305-1) durch den zentralen Dienstgütemanager (301) an eine zweite Funkzugangsentität (401-2);
Übermitteln einer Ressourcennachricht durch die zweite Funkzugangsentität (401-2) an den zentralen Dienstgütemanager (301), wobei die Ressourcennachricht anzeigt, dass die verfügbaren Funkzugangsressourcen der zweiten Funkzugangsentität (401-2) für die Kommunikationsverbindung zwischen dem mobilen Endgerät (403-1) und dem ersten Subnetzwerk (305-1) mit der Einhaltung der Dienstgüteklasse ausreichend sind; und
Führen der Kommunikationsverbindung des ersten Subnetzwerks (305-1) über die zweite Funkzugangsentität (401-2).

2. Verfahren nach Anspruch 1, wobei die erste Funkzugangsentität (401-1) die Funkzugangsressourcen für die Kommunikationsverbindung in Abhängigkeit von der übermittelten Angabe über die Dienstgüteklasse des ersten Subnetzwerks (305-1) zuteilt.

3. Verfahren nach einem der vorstehenden Ansprüche, wobei der zentrale Dienstgütemanager (301) eine Übergabe der Kommunikationsverbindung zwischen dem mobilen Endgerät (403-1) und dem ersten Subnetzwerk (305-1) von der ersten Funkzugangsentität (401-1) zu der zweiten Funkzugangsentität (401-2)initiiert.

4. Verfahren nach Anspruch 3, wobei der zentrale Dienstgütemanager (301) die Übergabe der Kommunikationsverbindung gemäß zumindest einem der folgenden Optimierungsparametern initiiert: Verfügbarkeit von Funkzugangsressourcen und/oder Datenverarbeitungsressourcen von Funkzugangsentitäten für die jeweilige Kommunikationsverbindung mit der jeweiligen Dienstgüteklasse, Lastausgleich unter den Funkzugangsentitäten, Auswahl einer Funkzugangsentitäten mit den geringsten Funkzugangsressourcen, welche die jeweilige Dienstgüteklasse erfüllen, Dienstgüteanforderungen an einen Datenstrom.

5. Verfahren nach einem der vorstehenden Ansprüche, wobei die Funktionen der Subnetzwerke (305) durch einen Netzwerk-Orchestrierer vorgegeben sind, und wobei der zentrale Dienstgütemanager (301) eine Nachricht an den Netzwerk-Orchestrierer aussendet, falls eine Dienstgütevereinbarung nicht eingehalten werden kann.

6. Verfahren nach einem der vorstehenden Ansprüche, wobei jede Funkzugangsentität (401) eine Ressourcensteuerung zur Steuerung von Funkzugangsressourcen der jeweiligen Funkzugangsentität (401) aufweist, und wobei die Ressourcensteuerung der jeweiligen Funkzugangsentität (401) dem jeweiligen Subnetzwerk (305) Funkzugangsressourcen zuweist, um die jeweilige Dienstgüteklasse zu unterstützen.

7. Verfahren nach einem der vorstehenden Ansprüche, wobei die Funkzugangsressourcen zumindest eine der folgenden Funkzugangsressourcen sind: Bandbreite, Frequenzspektrum, Zeitressourcen, Anzahl von Übertragungsrahmen, Anzahl von Zeitschlitzen, Sendeleistung.

8. Verfahren nach einem der vorstehenden Ansprüche, wobei die jeweilige Dienstgüteklasse zumindest einen der folgenden Parameter aufweist: Bandbreite, Datenrate, Bitrate, Bitfehlerrate, Blockfehlerrate, Übertragungsverzögerung.

9. Verfahren nach einem der vorstehenden Ansprüche, wobei die Funkzugangsentitäten Basisstationen oder Router, insbesondere drahtlose Router, sind.

10. Verfahren nach einem der vorstehenden Ansprüche, wobei die Funkzugangsentitäten (401) für unterschiedliche Funkzugangstechnologien ausgelegt sind, insbesondere LTE, WLAN, UMTS, GSM, 5G, und Kommunikationstechnologien für Maschine Type Communication (MTC).

## Claims

1. Method for controlling radio access resources in a communication network (300),
which has a plurality of subnetworks (305, 305-1, 305-2), logically separate from one another, that each have an associated prescribed quality of service class according to at least one quality of service agreement for communication services,
which has a central quality of service manager (301) that manages the quality of service classes of the subnetworks (305) and uses the radio access resources to provide the quality of service for communication connections from mobile terminals to the subnetworks,
which further has a radio access network (303) having a plurality of radio access entities (401) for providing radio access for mobile terminals (403) to the subnetworks,
the method comprising the steps of:
the central quality of service manager (301) transmitting to a first radio access entity (401-1) a request for radio access by a mobile terminal (403-1) to a first subnetwork (305-1) via the radio access network (303) with an indication of the quality of service class of the first subnetwork (305-1) ;
the first radio access entity (401-1) transmitting a resource message to the central quality of service manager (301), wherein the resource message displays that the available radio access resources of the first radio access entity (401-1) are not adequate for a communication connection between the mobile terminal (403-1) and the first subnetwork (305-1) with the quality of service class;
the central quality of service manager (301) transmitting to a second radio access entity (401-2) the request for radio access by a mobile terminal (403-1) to the first subnetwork (305-1) via the radio access network (303) with an indication of the quality of service class of the first subnetwork (305-1) ;
the second radio access entity (401-2) transmitting a resource message to the central quality of service manager (301), wherein the resource message displays that the available radio access resources of the second radio access entity (401-2) are adequate for the communication connection between the mobile terminal (403-1) and the first subnetwork (305-1) with compliance with the quality of service class; and
directing the communication connection of the first subnetwork (305-1) via the second radio access entity (401-2).

2. Method according to Claim 1, wherein the first radio access entity (401-1) allocates the radio access resources for the communication connection on the basis of the transmitted indication of the quality of service class of the first subnetwork (305-1).

3. Method according to either of the preceding claims, wherein the central quality of service manager (301) initiates a transfer of the communication connection between the mobile terminal (403-1) and the first subnetwork (305-1) from the first radio access entity (401-1) to the second radio access entity (401-2).

4. Method according to Claim 3, wherein the central quality of service manager (301) initiates the transfer of the communication connection according to at least one of the following optimization parameters: availability of radio access resources and/or data processing resources of radio access entities for the respective communication connection with the respective quality of service class, load equalization among the radio access entities, selection of a radio access entity having the least radio access resources that satisfy the respective quality of service class, quality of service demands on a data stream.

5. Method according to either of the preceding claims, wherein the functions of the subnetworks (305) are prescribed by a network orchestrator, and wherein the central quality of service manager (301) transmits a message to the network orchestrator if a quality of service agreement cannot be complied with.

6. Method according to one of the preceding claims, wherein each radio access entity (401) has resource control for controlling radio access resources of the respective radio access entity (401), and wherein the resource control of the respective radio access entity (401) allocates radio access resources to the respective subnetwork (305) in order to support the respective quality of service class.

7. Method according to one of the preceding claims, wherein the radio access resources are at least one of the following radio access resources: bandwidth, frequency spectrum, time resources, number of transmission frames, number of time slots, transmission power.

8. Method according to one of the preceding claims, wherein the respective quality of service class has at least one of the following parameters: bandwidth, data rate, bit rate, bit error rate, block error rate, transmission delay.

9. Method according to one of the preceding claims, wherein the radio access entities are base stations or routers, in particular wireless routers.

10. Method according to one of the preceding claims, wherein the radio access entities (401) are designed for different radio access technologies, in particular LTE, WLAN, UMTS, GSM, 5G, and communication technologies for machine type communication (MTC).

## Revendications

1. Procédé de commande de ressources d'accès radio dans un réseau de communication (300),
qui comporte une pluralité de sous-réseaux séparés logiquement les uns des autres (305, 305-1, 305-2), auxquels est respectivement attribué une catégorie de qualité de service prédéfinie conformément au moins à une convention de qualité de service pour des services de communication,
qui comporte un gestionnaire de qualité de service central (301), qui gère les catégories de qualité de service des sous-réseaux (305) et fournit la qualité de service pour les liaisons de communication de terminaux mobiles aux sous-réseaux en utilisant les ressources d'accès radio,
qui comporte en plus un réseau d'accès radio (303) avec une pluralité d'entités d'accès radio (401) pour fournir l'accès radio pour des terminaux mobiles (403) aux sous-réseaux,
le procédé comprenant les phases suivantes :
transmission d'une demande pour un accès radio d'un terminal mobile (403-1) par le biais du réseau d'accès radio (303) à un premier sous-réseau (305-1) avec indication concernant la catégorie de qualité de service du premier sous-réseau (305-1) par le gestionnaire de qualité de service central (301) à une première entité d'accès radio (401-1),
transmission d'un message de ressources par la première entité d'accès radio (401-1) au gestionnaire de qualité de service central (301), sachant que le message de ressources indique que les ressources d'accès radio disponibles de la première entité d'accès radio (401-1) pour une liaison de communication entre le terminal mobile (403-1) et le premier sous-réseau (305-1) ne sont pas suffisantes avec la catégorie de qualité de service,
transmission de la demande pour un accès radio d'un terminal mobile (403-1) par le biais du réseau d'accès radio (303) à un premier sous-réseau (305-1) avec indication concernant la catégorie de qualité de service du premier sous-réseau (305-1) par le gestionnaire de qualité de service central (301) à une deuxième entité d'accès radio (401-2),
transmission d'un message de ressources par la deuxième entité d'accès radio (401-2) au gestionnaire de qualité de service central (301), le message de ressources indiquant que les ressources d'accès radio disponibles de la deuxième entité d'accès radio (401-2) pour la liaison de communication entre le terminal mobile (403-1) et le premier sous-réseau (305-1) sont suffisantes pour le maintien de la catégorie de qualité de service, et
gestion de la liaison de communication du premier sous-réseau (305-1) par le biais de la deuxième entité d'accès radio (401-2).

2. Procédé selon la revendication 1, dans lequel la première entité d'accès radio (401-1) attribue les ressources d'accès radio pour la liaison de communication en fonction de l'indication transmise par la catégorie de qualité de service du premier sous-réseau (305-1).

3. Procédé selon l'une quelconque des revendications précédentes, dans lequel le gestionnaire de qualité de service central (301) initie une transmission de la liaison de communication entre le terminal mobile (403-1) et le premier sous-réseau (305-1) de la première entité d'accès radio (401-1) à la deuxième entité d'accès radio (401-2).

4. Procédé selon la revendication 3, dans lequel le gestionnaire de qualité de service central (301) initie la transmission de la liaison de communication selon au moins un des paramètres d'optimisation suivants : disponibilité des ressources d'accès radio et/ou ressources de traitement des données des entités d'accès radio pour la liaison de communication respective avec la catégorie de qualité de service respective, équilibrage de charge entre les entités d'accès radio, sélection d'une entité d'accès radio avec les ressources d'accès radio minimales, lesquelles satisfont à la catégorie de qualité de service respective, exigences de qualité de service imposées à un flux de données.

5. Procédé selon l'une quelconque des revendications précédentes, dans lequel les fonctions des sous-réseaux (305) sont prédéfinies par un orchestreur de réseau et dans lequel le gestionnaire de qualité de service central (301) émet un message à l'orchestreur de réseau, au cas où une convention de qualité de service ne peut pas être maintenue.

6. Procédé selon l'une quelconque des revendications précédentes, dans lequel chaque entité d'accès radio (401) comporte une commande de ressources pour commander des ressources d'accès radio de l'entité d'accès radio (401) respective et dans lequel la commande de ressources de l'entité d'accès radio (401) respective assigne des ressources d'accès radio au sous-réseau (305) respectif pour soutenir la catégorie de qualité de service respective.

7. Procédé selon l'une quelconque des revendications précédentes, dans lequel les ressources d'accès radio sont au moins une des ressources d'accès radio suivantes : largeur de bande, spectre de fréquence, ressources de temps, nombre de cadres de transmission, nombre d'intervalles de temps, puissance d'émission.

8. Procédé selon l'une quelconque des revendications précédentes, dans lequel la catégorie de qualité de service respective comporte au moins un des paramètres suivants : largeur de bande, débit de données, débit binaire, taux d'erreurs binaires, taux d'erreurs de bloc, retard de transmission.

9. Procédé selon l'une quelconque des revendications précédentes, dans lequel les entités d'accès radio sont des stations de base ou routeurs, en particulier des routeurs sans fil.

10. Procédé selon l'une quelconque des revendications précédentes, dans lequel les entités d'accès radio (401) sont conçues pour différentes technologies d'accès radio, en particulier LTE, WLAN, UMTS, GSM, 5G et des technologies de communication pour la communication de type machine (CTM).
